(19) Europäisches Patentamt
European Patent Office
Office européen des brevets

(11) **EP 2 674 920 A1**

(12) **EUROPEAN PATENT APPLICATION**
published in accordance with Art. 153(4) EPC

(43) Date of publication:
**18.12.2013 Bulletin 2013/51**

(51) Int Cl.:
**G06T 19/00** (2011.01)     **G06F 3/01** (2006.01)

(21) Application number: **12744752.2**

(22) Date of filing: **06.01.2012**

(86) International application number:
**PCT/JP2012/050204**

(87) International publication number:
**WO 2012/108219 (16.08.2012 Gazette 2012/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2011  JP 2011027631**

(71) Applicant: **NTT DOCOMO, INC.**
**Chiyoda-ku**
**Tokyo (JP)**

(72) Inventors:
• **OTA Manabu**
**Tokyo 100-6150 (JP)**
• **MORINAGA Yasuo**
**Tokyo 100-6150 (JP)**

(74) Representative: **Viering, Jentschura & Partner**
**Am Brauhaus 8**
**01099 Dresden (DE)**

(54) **OBJECT DISPLAY DEVICE, OBJECT DISPLAY METHOD, AND OBJECT DISPLAY PROGRAM**

(57)    An object display device calculates a setting value including the focal length for acquiring an image in real space with a camera setting value determination unit based on the distance to a virtual object calculated by a virtual object distance calculation unit, and acquires the image in real space with an imaging unit using the calculated focal length. Thus, an image that is in focus in a position where the virtual object is superimposed and becomes more out of focus as the distance increases from the position where the virtual object is superimposed is acquired. Since the virtual object is superimposed on the image in real space acquired in this manner, the virtual object that is the subject of attention for a user is emphasized, and a sense of incongruity in the superimposed image is reduced.

*Fig.1*

**Description**

**Technical Field**

The present invention relates to an object display device, an object display method, and an object display program.

**Background Art**

In recent years, services based on augmented reality (AR) technology have been developed and provided. For example, a technique in which an object arranged around a location of a mobile terminal is acquired and an object including various kinds of information or an image is superimposed and displayed on an image in real space acquired by a camera provided to the mobile terminal is known. Meanwhile, as a technique for taking into consideration the color of an object upon superimposing the object on an image in real space, a technique in which the color of the object is corrected based on the color of a marker arranged in real space is known (for example, see Patent Literature 1).

**Citation List**

**Patent Literature**

[Patent Literature 1] Japanese Patent Application Laid-Open Publication No. 2010-170316

**Summary of Invention**

**Technical Problem**

However, since an image of an object is merely superimposed on an imaged image in real space in normal AR technology, there have been cases where a sense of incongruity is caused in a synthesized image due to the difference in image quality or the like in two images.
Thus, the present invention is made in view of the problem described above, and it is an object to provide an object display device, an object display method, and an object display program with which it is possible to reduce a sense of incongruity upon superimposing and displaying an object on an image in real space in AR technology.

**Solution to Problem**

To solve the problem described above, an object display device according to one aspect of the present invention is an object display device that superimposes and displays an object in a predetermined position of an image in real space, including object information acquiring means for acquiring object information including position information relating to an arrangement position of the object in real space based on a location of the object display device, object distance calculating means for calculating a distance to the object based on the position information of the object acquired by the object information acquiring means, setting value determining means for determining, based on the distance calculated by the object distance calculating means, a setting value including at least a focal length for acquisition of the image in real space, image acquiring means for acquiring the image in real space using the setting value determined by the setting value determining means, image synthesizing means for generating an image in which the object acquired by the object information acquiring means is superimposed on the image in real space acquired by the image acquiring means, and display means for displaying the image generated by the image synthesizing means.
To solve the problem described above, an object display method according to another aspect of the present invention is an object display method performed by an object display device that superimposes and displays an object in a predetermined position of an image in real space, the object display method including an object information acquisition step of acquiring object information including position information relating to an arrangement position of the object in real space based on a location of the object display device, an object distance calculation step of calculating a distance to the object based on the position information of the object acquired in the object information acquisition step, a setting value determination step of determining, based on the distance calculated in the object distance calculation step, a setting value including at least a focal length for acquisition of the image in real space, an image acquisition step of acquiring the image in real space using the setting value determined in the setting value determination step, an image synthesis step of generating an image in which the object acquired in the object information acquisition step is superimposed on the image in real space acquired in the image acquisition step, and a display step of displaying the image generated in the image synthesis step.

To solve the problem described above, an object display program according to yet another aspect of the present invention is an object display program for causing a computer to function as an object display device that superimposes and displays an object in a predetermined position of an image in real space, the object display program causing the computer to implement: an object information acquisition function of acquiring object information including position information relating to an arrangement position of the object in real space based on a location of the object display device, an object distance calculation function of calculating a distance to the object based on the position information of the object acquired with the object information acquisition function, a setting value determination function of determining, based on the distance calculated with the object distance calculation function, a setting value including at least a focal length for acquisition of the image in real space, an image acquisition function of acquiring the image in real space using the setting value determined with the setting value determination function, an image synthesis function of generating an image in which the object acquired with the object information acquisition function is superimposed on the image in real space acquired with the image acquisition function, and a display function of displaying the image generated with the image synthesis function.

With the object display device, the object display method, and the object display program, the setting value including the focal length for acquiring the image in real space is calculated based on the distance to the object, and the image in real space is acquired with the calculated focal length. Thus, an image that is in focus in a position where the object is superimposed and becomes more out of focus as the distance increases from the position where the object is superimposed is acquired. Accordingly, since the object is superimposed on the image in real space that is in focus, the difference in the image quality of the image in real space and the image quality of the object is reduced, and a sense of incongruity in a synthesized image is reduced. Also, since the image in real space becomes more out of focus as the distance increases from the position where the object is superimposed, the object that is the subject of attention for a user is emphasized.

In the object display device according to one aspect of the present invention, it is possible that, in a case where a plurality of pieces of the object information are acquired by the object information acquiring means, the setting value determining means select one or more pieces of object information from the acquired plurality of pieces of object information and determine the setting value based on the distance to the object calculated based on the selected object information.

Since the setting value including the focal length is determined based on the distance to the plurality of objects in this case, the corresponding plurality of objects are emphasized in a superimposed image, and a sense of incongruity in the entire superimposed image is reduced.

It is possible that the object display device according to one aspect of the present invention further include object process means for performing, in accordance with a difference of the focal length determined by the setting value determining means and the distance to the object calculated by the object distance calculating means, a blurring process with respect to an image of the object for imitating an image acquired in a case where an imaging subject is present at a position displaced from the focal length, and the image synthesizing means superimpose the object processed by the object process means on the image in real space.

In this case, a blurring process is carried out with respect to the object in the case where the object is located in the position that is out of focus due to the focal length having been determined. Accordingly, since the object for which the blurring process has been carried out is superimposed in a region that is out of focus in real space, a superimposed image in which a sense of incongruity is reduced is obtained.

In the object display device according to one aspect of the present invention, it is possible that the setting value determining means determine the focal length and a depth of field as the setting value.

Since the depth of field in addition to the focal length is determined as the setting value with the configuration described above, the object that is the subject of attention for a user is more suitably emphasized, and a sense of incongruity in the superimposed image is reduced.

**Advantageous Effects of Invention**

It is possible to reduce a sense of incongruity upon superimposing and displaying an object on an image in real space in AR technology.

**Brief Description of Drawings**

[Fig. 1] Fig. 1 is a block diagram showing the functional configuration of an object display device.
[Fig. 2] Fig. 2 is a hardware block diagram of the object display device.
[Fig. 3] Fig. 3 is a view showing an example of the configuration of a virtual object storage unit and stored data.

3

[Fig. 4] Fig. 4 is a view showing an example of an image in which a virtual object is superimposed on an image in real space.

[Fig. 5] Fig. 5 is a flowchart showing the processing content of an object display method.

[Fig. 6] Fig. 6 is a view showing an example of an image in which a plurality of virtual objects are superimposed on an image in real space.

[Fig. 7] Fig. 7 is a view showing an example of an image in which a plurality of virtual objects are superimposed on an image in real space.

[Fig. 8] Fig. 8 is a flowchart showing the processing content of the object display method in the case where a plurality of virtual objects are superimposed.

[Fig. 9] Fig. 9 is a view showing the configuration of an object display program.

**Description of Embodiments**

An embodiment for an object display device, an object display method, and an object display program according to the present invention will be described with reference to the drawings. Note that, in cases where possible, the same portions are denoted by the same reference signs, and redundant descriptions are omitted.

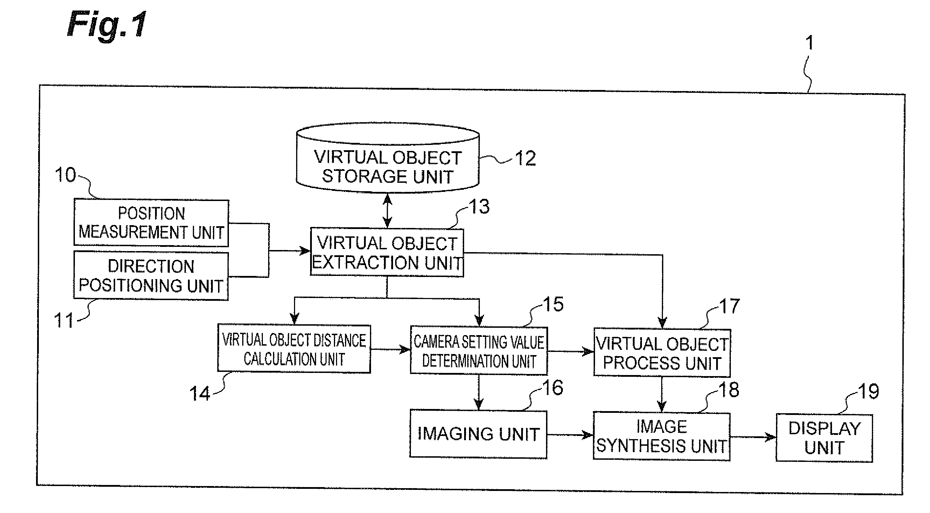

Fig. 1 is a block diagram showing the functional configuration of an object display device 1. The object display device 1 of this embodiment is a device that superimposes and displays an object on a certain position on an image in real space and is, for example, a mobile terminal with which communication via a mobile communication network is possible.

As a service based on AR technology using a device such as a mobile terminal, there is one, for example, in which a predetermined marker is detected from an image in real space acquired by a camera in a mobile terminal and an object associated with the marker is superimposed on the image in real space and displayed on a display. As a similar service, there is one in which an object arranged around the location of a mobile terminal is acquired and the object is superimposed and displayed in association with the position within an image in real space acquired by a camera provided to the mobile terminal. In this embodiment, the following description is given for the object display device 1 receiving the provided service of the former. However, this is not limiting.

As shown in Fig. 1, the object display device 1 functionally includes a position measurement unit 10, a direction positioning unit 11, a virtual object storage unit 12, a virtual object extraction unit 13 (object information acquiring means), a virtual object distance calculation unit 14 (object distance calculating means), a camera setting value determination unit 15 (setting value determining means), an imaging unit 16 (image acquiring means), a virtual object process unit 17 (virtual object process means), an image synthesis unit 18 (image synthesizing means), and a display unit 19 (display means).

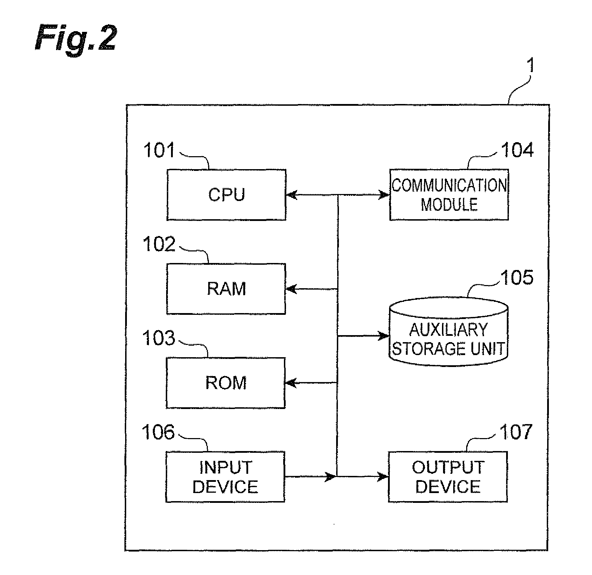

Fig. 2 is a hardware configuration diagram of the object display device 1. As shown in Fig. 2, the object display device 1 is physically configured as a computer system including a CPU 101, a RAM 102 and a ROM 103 that are a main storage device, a communication module 104 that is a data transmission/reception device, an auxiliary storage device 105 such as a hard disk or flash memory, an input device 106 such as a keyboard that is an input device, an output device 107 such as a display, and the like. Each function shown in Fig. 1 is achieved by loading predetermined computer software on hardware such as the CPU 101 or the RAM 102 shown in Fig. 2 to cause the communication module 104, the input device 106, and the output device 107 to work under the control of the CPU 101 and perform reading and writing of data in the RAM 102 or the auxiliary storage device 105. Again, referring to Fig. 1, each functional unit of the object display device 1 will be described in detail.

The position measurement unit 10 is a unit that measures the location of the object display device 1 and acquires information relating to the measured location as position information. The location of the object display device 1 is measured by, for example, positioning means such as a GPS device. The position measurement unit 10 sends the position information to the virtual object extraction unit 13.

The direction positioning unit 11 is a unit that measures the imaging direction of the imaging unit 16 and is configured of, for example, a device such as a geomagnetic sensor. The direction positioning unit 11 sends measured direction information to the virtual object extraction unit 13. Note that the direction positioning unit 11 is not a mandatory component in the present invention.

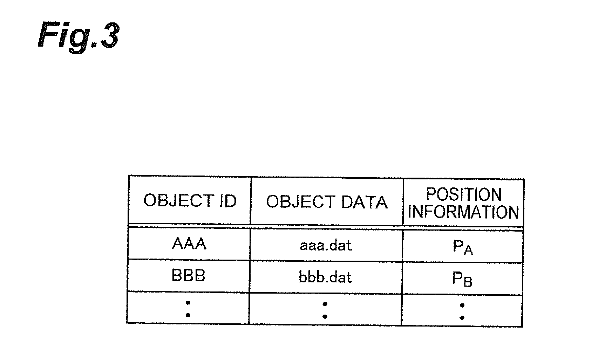

The virtual object storage unit 12 is storage means for storing virtual object information that is information relating to a virtual object. Fig. 3 is a view showing an example of the configuration of the virtual object storage unit 12 and data stored therein. As shown in Fig. 3, the virtual object information includes data such as object data and position information associated with an object ID with which the object is identified.

The object data is, for example, image data of the object. The object data may be data of a 3D object for representing the object. The position information is information representing the arrangement position of the object in real space and is represented by, for example, three-dimensional coordinate values.

The virtual object storage unit 12 may store virtual object information in advance. The virtual object storage unit 12 may accumulate the object information acquired via predetermined communication means (not shown) from a server (not shown) that stores and manages the virtual object information, based on the position information acquired by the position measurement unit 10. In this case, the server that stores and manages the virtual object information provides the virtual object information of a virtual object arranged around the object display device 1.

The virtual object extraction unit 13 is a unit that acquires the object information from the virtual object storage unit 12 based on the location of the object display device 1. Specifically, based on the position information measured by the position measurement unit 10 and the direction information measured by the direction positioning unit 11, the virtual object extraction unit 13 determines a range of real space to be displayed in the display unit 19 and extracts the virtual object of which the arrangement position is included in that range. In the case where the arrangement positions of a plurality of virtual objects are included in the range of real space to be displayed in the display unit, the virtual object extraction unit 13 extracts the plurality of virtual objects.

Note that it is possible that the virtual object extraction unit 13 carry out extraction of the virtual object without using the direction information. The virtual object extraction unit 13 sends the extracted virtual object information to the virtual object distance calculation unit 14, the camera setting value determination unit 15, and the virtual object process unit 17.

The virtual object distance calculation unit 14 is a unit that calculates the distance from the object display device 1 to the virtual object based on the position information of the virtual object acquired by the virtual object extraction unit 13. Specifically, the virtual object distance calculation unit 14 calculates the distance from the object display device 1 to the virtual object based on the position information measured by the position measurement unit 10 and the position information of the virtual object included in the virtual object information. In the case where the plurality of virtual objects are extracted by the virtual object extraction unit 13, the virtual object distance calculation unit 14 calculates the distance from the object display device 1 to each virtual object.

The camera setting value determination unit 15 is a unit that determines a setting value including at least a focal length for acquisition of the image in real space, based on the distance calculated by the virtual object distance calculation unit 14. The camera setting value determination unit 15 sends the determined setting value to the imaging unit 16. Note that the setting value may include a depth of field other than the focal length.

In the case where there is one virtual object extracted by the virtual object extraction unit 13, the camera setting value determination unit 15 can set the distance to the object calculated by the virtual object distance calculation unit 14 to the focal length.

In the case where there are a plurality of virtual objects extracted by the virtual object extraction unit 13, the camera setting value determination unit 15 selects one or more virtual objects to be emphasized from the plurality of virtual objects and determines the setting value based on the selected virtual object.

The camera setting value determination unit 15 can select the virtual object to be emphasized with various methods. For example, the camera setting value determination unit 15 can select the virtual object to be emphasized by accepting selection by a user. Specifically, the camera setting value determination unit 15 can set, as the virtual object to be emphasized, a virtual object for which a selection operation has been performed in the display unit 19 configured to include a touch panel or select, as the virtual object to be emphasized, a virtual object included in a predetermined range including a center portion in the display unit 19.

In the case where attribute information with which it is possible to determine the degree of preference of the user with respect to that virtual object is included in the virtual object information, the camera setting value determination unit 15 can compare attribute information (not shown) of the user held within the object display device 1 in advance and the attribute information of the virtual object and set a virtual object with a high degree of match thereof as the virtual object to be emphasized.

In the case where numerical value information showing the degree of priority relating to display of that virtual object is included in the virtual object information, the camera setting value determination unit 15 can reference the corresponding numerical value information of the virtual object information and set a virtual object of which the numerical value information is a predetermined value or greater as the virtual obj ect to be emphasized.

In the case where one virtual object to be emphasized is selected, the camera setting value determination unit 15 can set the distance to the virtual object calculated by the virtual object distance calculation unit 14 to the focal length. The depth of field in this case may be a predetermined value set in advance or may be input by the user.

In the case where a plurality of virtual objects to be emphasized are selected, the camera setting value determination unit 15 determines the focal length and the depth of field such that all of the arrangement positions of the plurality of virtual objects are included in a range that is in focus. Specifically, for example, the camera setting value determination unit 15 can set a region including all of the arrangement positions of the selected plurality of virtual objects, set the distance to the center-of-gravity position of that region as the focal length, and set the size of that region as the depth of field.

The imaging unit 16 is a unit that acquires the image in real space using the setting value determined by the camera setting value determination unit 15 and is configured of, for example, a camera. Specifically, the imaging unit 16 acquires the image in real space using the focal length and the depth of field determined by the camera setting value determination unit 15 and sends data of the acquired image to the image synthesis unit 18. Note that the depth of field may be a predetermined value set in advance.

The virtual object process unit 17 is a unit that, in accordance with the difference of the focal length determined by the camera setting value determination unit 15 and the distance to the virtual object calculated by the virtual object distance calculation unit, a blurring process with respect to an image of the object for imitating an image acquired in the case where an imaging subject is present at a position displaced from the focal length.

For example, the virtual object process unit 17 carries out the blurring process with respect to a virtual object that has not been selected as the virtual object to be emphasized by the camera setting value determination unit 15 out of the virtual objects extracted by the virtual object extraction unit 13. The virtual object process unit 17 can carry out the blurring process using a known image processing technique. One example thereof will be described below.

The virtual object process unit 17 can calculate a size B of the blur with formula (1) below.

$$B = (mD/W)(T/(L + T)) \qquad (1)$$

B: Size of blur
D: Effective aperture diameter which equals focal length divided by F-number
W: Diagonal length of imaging range
L: Distance from camera to subject
T: Distance from subject to background
m: Ratio of circle of confusion diameter and diagonal length of image sensor

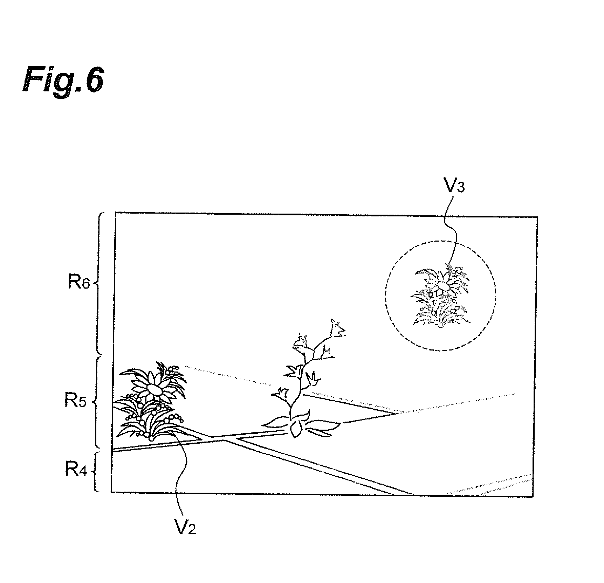

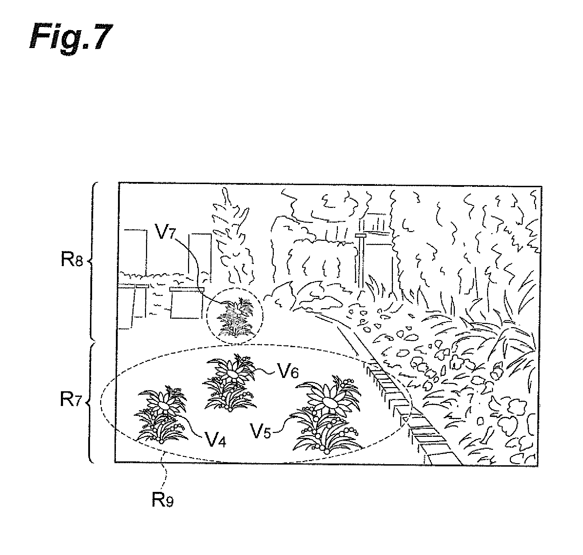

Based on the size B of the blur, the virtual object process unit 17 determines the blur amount of the blurring process and carries out the blurring process of the virtual object. The blurring process will be described later with reference to Figs. 6 and 7. Note that the virtual object process unit 17 is not a mandatory component in the present invention.

The image synthesis unit 18 is a unit that generates an image in which the virtual object acquired by the virtual object extraction unit 13 is superimposed on the image in real space acquired by the imaging unit 16. Specifically, the image synthesis unit 18 generates a superimposed image in which, based on the position information showing the arrangement position of the virtual object, the virtual object is superimposed in the arrangement position in the image in real space. Also, the image synthesis unit 18 superimposes the object processed by the virtual object process unit 17 on the image in real space in a similar manner.

The display unit 19 is a unit that displays the image generated by the image synthesis unit 18 and is configured of, for example, a device such as a display. Note that the display unit 19 may further include a touch panel.

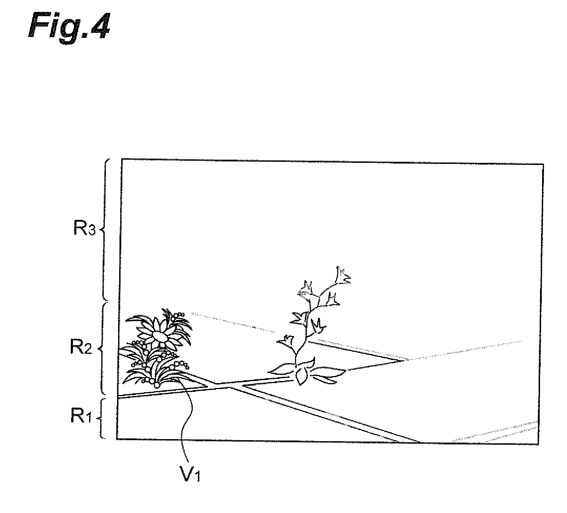

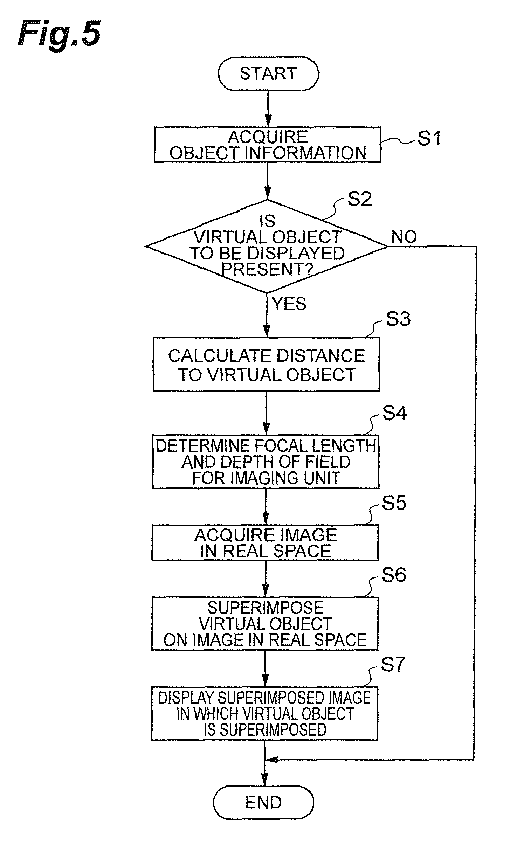

Next, referring to Figs. 4 and 5, display processing of the virtual object in the case where there is one virtual object extracted by the virtual object extraction unit 13 will be described. Fig. 4 is a view showing an example of the image in which the virtual object is superimposed on the image in real space in the case where there is one extracted virtual object and shows an example in the case where a virtual object $V_1$ is extracted by the virtual object extraction unit 13. In this case, the distance from the object display device 1 to the virtual object $V_1$ is calculated by the virtual object distance calculation unit 14, and the focal length is determined based on the calculated distance by the camera setting value determination unit 15. Subsequently, the imaging unit 16 acquires the image in real space based on the information of the determined focal length. Since the distance to the arrangement position of the virtual object $V_1$ is set as the focal length in the image in real space acquired herein, a region $R_2$ including the arrangement position of the virtual object $V_1$ in the image in real space is in focus. By contrast, since a region $R_1$ that is closer than the region $R_2$ in distance from the object display device 1 and a region $R_3$ that is farther than the region $R_2$ are not in focus, images in the region $R_1$ and the region $R_3$ are in what is called an out-of-focus state. The image synthesis unit 18 generates a superimposed image in which the virtual object $V_1$ is superimposed on the image in real space with the region $R_2$ is in focus. Then, the display unit 19 displays the superimposed image as shown in Fig. 4.

Fig. 5 is a flowchart showing the display processing of the virtual object in the case where there is one virtual object extracted by the virtual object extraction unit 13.

First, the virtual object extraction unit 13 acquires the object information from the virtual object storage unit 12 based on the location of the object display device 1 (S1: object information acquisition step). That is, the virtual object extraction unit 13 determines a range of real space to be displayed in the display unit 19 and extracts the virtual object of which the arrangement position is included in that range. Herein, processing is terminated in the case where the virtual object to be displayed is absent (S2). In the case where the virtual object to be displayed is present, the processing procedure proceeds to step S3 (S2).

Next, the virtual object distance calculation unit 14 calculates the distance from the object display device 1 to the virtual object based on the position information of the virtual object acquired by the virtual object extraction unit 13 (S3: object distance calculation step). Subsequently, the camera setting value determination unit 15 determines the focal length and the depth of field for the imaging unit 16 based on the distance calculated by the virtual object distance calculation unit 14 (S4: setting value determination step).

Next, the imaging unit 16 acquires the image in real space using the focal length and the depth of field determined in step S4 (S5: image acquisition step). Subsequently, the image synthesis unit 18 generates the superimposed image in which the virtual object acquired by the virtual object extraction unit 13 is superimposed on the image in real space acquired by the imaging unit 16 (S6: image synthesis step). Then, the display unit 19 displays the superimposed image generated in step S6 (S7: display step).

Note that in the processing shown in the flowchart in Fig. 5, the function of the virtual object process unit 17 is not used. That is, data of the virtual object extracted the by virtual object extraction unit 13 is sent to the image synthesis unit 18 without being processed in the virtual object process unit 17.

Next, referring to Fig. 6 to Fig. 8, display processing of the virtual object in the case where there are a plurality of virtual objects extracted by the virtual object extraction unit 13 will be described. Fig. 6 is a view showing an example of an image in which virtual objects are superimposed on the image in real space in the case where there are two extracted virtual objects. Fig. 6 shows an example in the case where virtual objects $V_2$ and $V_3$ are extracted by the virtual object extraction unit 13 and where the virtual object $V_2$ out of the virtual objects $V_2$ and $V_3$ is selected as the virtual object to be emphasized.

In this case, the distance from the object display device 1 to the virtual object $V_2$ is calculated by the virtual object distance calculation unit 14, and the focal length is determined based on the calculated distance by the camera setting value determination unit 15. Subsequently, the imaging unit 16 acquires the image in real space based on the information of the determined focal length. Since the distance to the arrangement position of the virtual object $V_2$ is set as the focal length in the image in real space acquired herein, a region $R_5$ including the arrangement position of the virtual object $V_2$ in the image in real space is in focus. By contrast, since a region $R_4$ that is closer than the region $R_5$ in distance from the object display device 1 and a region $R_6$ that is farther than the region $R_5$ are not in focus, images in the region $R_4$ and the region $R_6$ are in what is called an out-of-focus state.

Furthermore, since the virtual object $V_3$ is a virtual object arranged in the region $R_6$ that is not in focus, the virtual object process unit 17 carries out the blurring process with respect to an image of the virtual object $V_3$ in accordance with the difference of the focal length determined based on the arrangement position of the virtual object $V_2$ and the distance to the virtual object $V_3$ calculated by the virtual object distance calculation unit 14. Accordingly, the image of the virtual object $V_3$ becomes an image that is out of focus to the same degree as in the image in real space in the region $R_6$.

The image synthesis unit 18 generates a superimposed image in which the virtual objects $V_2$ and $V_3$ are superimposed on the image in real space with the region $R_5$ in focus. Then, the display unit 19 displays the superimposed image as shown in Fig. 6.

In the example shown in Fig. 6, the blurring process is carried out with respect to the object in the case where the object is located in a position that is out of focus due to the determined focal length. Accordingly, since the object for which the blurring process has been carried out is superimposed in a region that is out of focus in real space, a superimposed image in which a sense of incongruity is reduced is obtained.

Fig. 7 is a view showing an example of an image in which virtual objects are superimposed on the image in real space in the case where there are four extracted virtual objects. Fig. 7 shows an example in the case where virtual objects $V_4$ to $V_7$ are extracted by the virtual object extraction unit 13 and where the virtual objects $V_4$ to $V_6$ out of the virtual objects $V_4$ to $V_7$ are selected as the virtual objects to be emphasized.

In this case, the camera setting value determination unit 15 determines the focal length and the depth of field such that all of the arrangement positions of the corresponding plurality of virtual objects $V_4$ to $V_6$ are included in a region that is in focus. Specifically, the camera setting value determination unit 15 sets a region $R_9$ including all of the arrangement positions of the selected plurality of virtual objects, sets the distance to the center-of-gravity position of the region $R_9$ as the focal length, and sets the size of the region $R_9$ as the depth of field.

Subsequently, the imaging unit 16 acquires the image in real space based on the information of the determined focal length and depth of field. Since the distance to the region $R_9$ is set as the focal length in the image in real space acquired herein, the region $R_7$ including the position of the region $R_9$ in the image in real space is in focus. By contrast, since the region $R_8$ that is farther than the region $R_7$ in distance from the object display device 1 is not in focus, an image in the region $R_8$ is in what is called an out-of-focus state.

Furthermore, since the virtual object $V_7$ is a virtual object not selected as the virtual object to be emphasized and arranged in the region $R_8$ that is not in focus, the virtual object process unit 17 carries out the blurring process with respect to an image of the virtual object $V_7$ in accordance with the difference of the focal length determined based on the position of the region $R_9$ and the distance to the virtual object $V_7$ calculated by the virtual object distance calculation unit 14. Accordingly, the image of the virtual object $V_7$ becomes an image that is out of focus to the same degree as in the image in real space in the region $R_8$.

The image synthesis unit 18 generates a superimposed image in which the virtual objects $V_4$ to $V_7$ are super-imposed on the image in real space in which the region $R_7$ is in focus. Then, the display unit 19 displays the superimposed image as shown in Fig. 7.

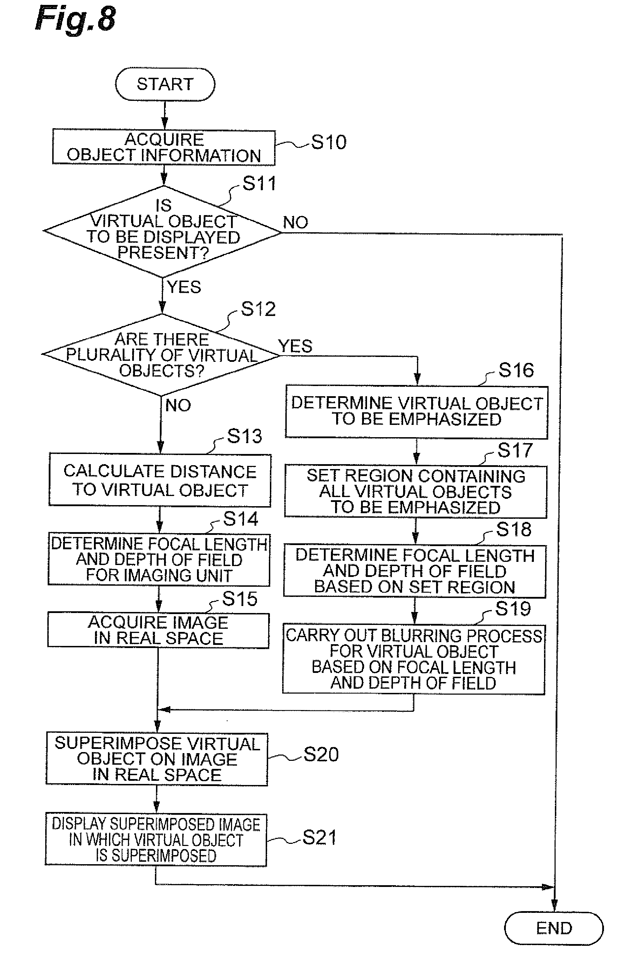

Fig. 8 is a flowchart showing the display processing of the virtual object in the case where one or a plurality of virtual objects are extracted by the virtual object extraction unit 13.

The processing in steps S10 and S11 is similar to steps S1 and S2 in the flowchart shown in Fig. 5. In step S12 that follows, the virtual object extraction unit 13 determines whether or not there are a plurality of extracted virtual objects (S12). In the case where it is determined that there are a plurality of extracted virtual objects, the processing procedure proceeds to step S16. In the case where it is not determined that there are a plurality of extracted virtual objects, the processing procedure proceeds to step S13.

The processing in steps S13 to S15 is similar to steps S3 to S5 in the flowchart shown in Fig. 5. In step S16, the camera setting value determination unit 15 selects the virtual object to be emphasized from the plurality of extracted virtual objects (S16). Subsequently, the camera setting value determination unit 15 sets a region including all of the arrangement positions of the selected plurality of virtual objects (S17). Then, the camera setting value determination unit 15 determines the focal length and the depth of field based on the region set in step S17 (S18). Furthermore, the virtual object process unit 17 carries out the blurring process with respect to the virtual object to be arranged in a region that is not in focus, based on the focal length and the depth of field determined in step S 18 (S19).

The processing in subsequent steps S20 and S21 is similar to steps S6 and S7 in the flowchart shown in Fig. 5.

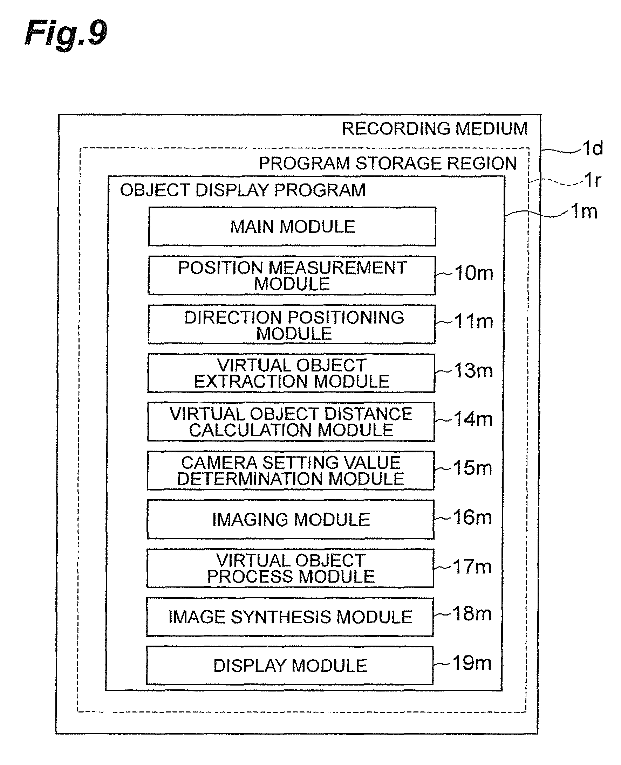

Next, an object display program for causing a computer to function as the object display device 1 of this embodiment will be described. Fig. 9 is a view showing the configuration of an object display program 1m.

The object display program 1m is configured to include a main module 100m that entirely controls object display processing, a position measurement module 10m, a direction positioning module 11m, a virtual object storage module 12m, a virtual object extraction module 13m, a virtual object distance calculation module 14m, a camera setting value determination module 15m, an imaging module 16m, a virtual object process module 17m, an image synthesis module 18m, and a display module 19m. Then, functions for the respective functional units 10 to 19 in the object display device 1 are achieved by the respective modules 10m to 19m. Note that the object display program 1m may be in a form transmitted via a transmission medium such as a communication line or may be in a form stored in a program storage region 1r of a recording medium 1d as shown in Fig. 9.

With the object display device 1, the object display method, and the object display program of this embodiment described above, the setting value including the focal length for acquiring the image in real space is calculated by the camera setting value determination unit 15 based on the distance to the virtual object calculated by the virtual object distance calculation unit 14, and the image in real space is acquired by the imaging unit 16 using the calculated focal length. Thus, an image that is in focus in a position where the virtual object is superimposed and becomes more out of focus as the distance increases from the position where the virtual object is superimposed is acquired. Since the virtual object is superimposed on the image in real space acquired in this manner, the virtual object that is the subject of attention for the user is emphasized, and a sense of incongruity in the superimposed image is reduced.

The present invention has been described above in detail based on the embodiments thereof. However, the present invention is not limited to the embodiments described above. For the present invention, various modifications are possible without departing from the gist thereof.

**Industrial Applicability**

The present invention can reduce a sense of incongruity upon superimposing and displaying an object on an image in real space in AR technology.

**Reference Signs List**

1... object display device, 10... position measurement unit, 11... direction positioning unit, 12... virtual object storage unit, 13... virtual object extraction unit, 14... virtual object distance calculation unit, 15... camera setting value determination unit, 16... imaging unit, 17... virtual object process unit, 18... image synthesis unit, 19... display unit, 1m... object display program, 10m... position measurement module, 11m... direction positioning module, 12m... virtual object storage module, 13m... virtual object extraction module, 14m... virtual object distance calculation module, 15m... camera setting value determination module, 16m... imaging module, 17m... virtual object process module, 18m... image synthesis module, 19m... display module, 100m... main module, $V_1$ to $V_7$... virtual object

**Claims**

1. An object display device that superimposes and displays an object in a predetermined position of an image in real space, the object display device comprising:

   object information acquiring means for acquiring object information including position information relating to an arrangement position of the object in real space based on a location of the object display device;
   object distance calculating means for calculating a distance to the object based on the position information of the object acquired by the object information acquiring means;
   setting value determining means for determining, based on the distance calculated by the object distance calculating means, a setting value including at least a focal length for acquisition of the image in real space;
   image acquiring means for acquiring the image in real space using the setting value determined by the setting value determining means;
   image synthesizing means for generating an image in which the object acquired by the object information acquiring means is superimposed on the image in real space acquired by the image acquiring means; and
   display means for displaying the image generated by the image synthesizing means.

2. The object display device according to claim 1, wherein, in a case where a plurality of pieces of the object information are acquired by the object information acquiring means, the setting value determining means selects one or more pieces of object information from the acquired plurality of pieces of object information and determines the setting value based on the distance to the object calculated based on the selected object information.

3. The object display device according to claim 2, further comprising:

   object process means for performing, in accordance with a difference of the focal length determined by the setting value determining means and the distance to the object calculated by the object distance calculating means, a blurring process with respect to an image of the object for imitating an image acquired in a case where an imaging subject is present at a position displaced from the focal length, wherein
   the image synthesizing means superimposes the object processed by the object process means on the image in real space.

4. The object display device according to any one of claims 1 to 3, wherein the setting value determining means determines the focal length and a depth of field as the setting value.

5. An object display method performed by an object display device that superimposes and displays an object in a predetermined position of an image in real space, the object display method comprising:

   an object information acquisition step of acquiring object information including position information relating to an arrangement position of the object in real space based on a location of the object display device;
   an object distance calculation step of calculating a distance to the object based on the position information of the object acquired in the object information acquisition step;
   a setting value determination step of determining, based on the distance calculated in the object distance calculation step, a setting value including at least a focal length for acquisition of the image in real space;
   an image acquisition step of acquiring the image in real space using the setting value determined in the setting value determination step;
   an image synthesis step of generating an image in which the object acquired in the object information acquisition step is superimposed on the image in real space acquired in the image acquisition step; and
   a display step of displaying the image generated in the image synthesis step.

6. An object display program for causing a computer to function as an object display device that superimposes and displays an object in a predetermined position of an image in real space, the object display program causing the computer to implement:

   an object information acquisition function of acquiring object information including position information relating to an arrangement position of the object in real space based on a location of the object display device;
   an object distance calculation function of calculating a distance to the object based on the position information of the object acquired with the object information acquisition function;
   a setting value determination function of determining, based on the distance calculated with the object distance calculation function, a setting value including at least a focal length for acquisition of the image in real space; an image acquisition function of acquiring the image in real space using the setting value determined with the setting value determination function;

an image synthesis function of generating an image in which the object acquired with the object information acquisition function is superimposed on the image in real space acquired with the image acquisition function; and a display function of displaying the image generated with the image synthesis function.

*Fig.1*

POSITION MEASUREMENT UNIT — 10

DIRECTION POSITIONING UNIT — 11

VIRTUAL OBJECT STORAGE UNIT — 12

VIRTUAL OBJECT EXTRACTION UNIT — 13

VIRTUAL OBJECT DISTANCE CALCULATION UNIT — 14

CAMERA SETTING VALUE DETERMINATION UNIT — 15

IMAGING UNIT — 16

VIRTUAL OBJECT PROCESS UNIT — 17

IMAGE SYNTHESIS UNIT — 18

DISPLAY UNIT — 19

1

EP 2 674 920 A1

# Fig.2

*Fig.3*

| OBJECT ID | OBJECT DATA | POSITION INFORMATION |
|:---:|:---:|:---:|
| AAA | aaa.dat | $P_A$ |
| BBB | bbb.dat | $P_B$ |
| ⋮ | ⋮ | ⋮ |

## Fig.4

# Fig.5

START

ACQUIRE OBJECT INFORMATION — S1

IS VIRTUAL OBJECT TO BE DISPLAYED PRESENT? — S2 — NO

YES

CALCULATE DISTANCE TO VIRTUAL OBJECT — S3

DETERMINE FOCAL LENGTH AND DEPTH OF FIELD FOR IMAGING UNIT — S4

ACQUIRE IMAGE IN REAL SPACE — S5

SUPERIMPOSE VIRTUAL OBJECT ON IMAGE IN REAL SPACE — S6

DISPLAY SUPERIMPOSED IMAGE IN WHICH VIRTUAL OBJECT IS SUPERIMPOSED — S7

END

*Fig.6*

# Fig.7

*Fig.8*

```
                    ┌─────────────┐
                    │    START    │
                    └──────┬──────┘
                           │
                           ▼
              ┌─────────────────────────┐
              │       ACQUIRE           │ ～S10
              │   OBJECT INFORMATION    │
              └───────────┬─────────────┘
                          │        S11
                          ▼
                  ◇ IS                  ◇
                 / VIRTUAL OBJECT  \  NO
                <  TO BE DISPLAYED   >─────────────────────┐
                 \    PRESENT?      /                       │
                  ◇                ◇                        │
                          │ YES                             │
                          ▼           S12                   │
                  ◇ ARE THERE       ◇   YES                 │
                 / PLURALITY OF VIRTUAL \──────────┐        │
                <     OBJECTS?          >           │        │
                  ◇                    ◇            ▼        │
                          │ NO            ┌─────────────────────────┐
                          │               │ DETERMINE VIRTUAL OBJECT│ S16
                          │               │     TO BE EMPHASIZED    │
                          ▼  S13          └───────────┬─────────────┘
              ┌─────────────────────────┐             ▼
              │  CALCULATE DISTANCE     │  ┌─────────────────────────┐
              │    TO VIRTUAL OBJECT    │  │  SET REGION CONTAINING  │ S17
              └───────────┬─────────────┘  │    ALL VIRTUAL OBJECTS  │
                          │  S14           │    TO BE EMPHASIZED     │
                          ▼                └───────────┬─────────────┘
              ┌─────────────────────────┐              ▼
              │ DETERMINE FOCAL LENGTH  │  ┌─────────────────────────┐
              │   AND DEPTH OF FIELD    │  │  DETERMINE FOCAL LENGTH │ S18
              │    FOR IMAGING UNIT     │  │    AND DEPTH OF FIELD   │
              └───────────┬─────────────┘  │    BASED ON SET REGION  │
                          │  S15           └───────────┬─────────────┘
                          ▼                            ▼  S19
              ┌─────────────────────────┐  ┌─────────────────────────┐
              │     ACQUIRE IMAGE       │  │ CARRY OUT BLURRING      │
              │     IN REAL SPACE       │  │  PROCESS FOR VIRTUAL    │
              └───────────┬─────────────┘  │  OBJECT BASED ON FOCAL  │
                          │                │  LENGTH AND DEPTH OF    │
                          │                │         FIELD           │
                          │                └───────────┬─────────────┘
                          │◄───────────────────────────┘
                          ▼
              ┌─────────────────────────┐
              │  SUPERIMPOSE VIRTUAL    │ ～S20
              │   OBJECT ON IMAGE       │
              │     IN REAL SPACE       │
              └───────────┬─────────────┘
                          ▼
              ┌─────────────────────────┐
              │ DISPLAY SUPERIMPOSED    │ ～S21
              │ IMAGE IN WHICH VIRTUAL  │
              │ OBJECT IS SUPERIMPOSED  │
              └───────────┬─────────────┘
                          │
                          └──────────────────────────────┐
                                                          ▼
                                                   ┌─────────────┐
                                                   │     END     │
                                                   └─────────────┘
```

*Fig.9*

RECORDING MEDIUM ——1d

PROGRAM STORAGE REGION ——1r

OBJECT DISPLAY PROGRAM ——1m

| MAIN MODULE |
|---|

| POSITION MEASUREMENT MODULE | ——10m |

| DIRECTION POSITIONING MODULE | ——11m |

| VIRTUAL OBJECT EXTRACTION MODULE | ——13m |

| VIRTUAL OBJECT DISTANCE CALCULATION MODULE | ——14m |

| CAMERA SETTING VALUE DETERMINATION MODULE | ——15m |

| IMAGING MODULE | ——16m |

| VIRTUAL OBJECT PROCESS MODULE | ——17m |

| IMAGE SYNTHESIS MODULE | ——18m |

| DISPLAY MODULE | ——19m |

## INTERNATIONAL SEARCH REPORT

| | International application No. |
|---|---|
| | PCT/JP2012/050204 |

A. CLASSIFICATION OF SUBJECT MATTER
*G06T19/00*(2011.01)i, *G06F3/01*(2006.01)i

According to International Patent Classification (IPC) or to both national classification and IPC

B. FIELDS SEARCHED

Minimum documentation searched (classification system followed by classification symbols)
G06T19/00

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2002-251634 A (Kabushiki Kaisha MR System Kenkyusho), 06 September 2002 (06.09.2002), paragraphs [0001], [0030] to [0032]; fig. 4 & US 2002/118217 A1 | 1-6 |

☐ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 January, 2012 (20.01.12) | 31 January, 2012 (31.01.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010170316 A